# EUROPEAN PATENT APPLICATION

(11) **EP 4 737 775 A1**
(43) Date of publication of application: **06.05.2026**
(21) Application number: 25208088.2
(22) Date of filing: 10.10.2025
(51) Int. Cl.: F16K 11/07, F16K 27/00, F16K 27/04, F16K 31/50

(54) **SWITCHING DEVICE AND VEHICLE**

(30) Priority: 29.10.2024 JP 2024189560
(71) Applicant: TOYOTA JIDOSHA KABUSHIKI KAISHA, Toyota-shi, Aichi-ken 471-8571 (JP)
(72) Inventor: OHGATA, Yusuke, TOYOTA-SHI, AICHI-KEN, 471-8571 (JP); MORIYAMA, Shuji, TOYOTA-SHI, AICHI-KEN, 471-8571 (JP); TANIGUCHI, Motoki, TOYOTA-SHI, AICHI-KEN, 471-8571 (JP)
(74) Representative: Cabinet Beau de Loménie

(57) **Abstract**

A switching device includes a spool valve (30) extending in a Z direction, a case (20) that accommodates the spool valve (30), and an actuator (40) that drives the spool valve (30). A space (S11 to S13) and a flow path (21a) are formed inside the case (20), the spool valve (30) moving in the Z direction in the space (S11 to S13), the flow path (21a) being connected with the space (S11 to S13). The actuator (40) includes a rod (41) coupled to the spool valve (30), and a motor (45) that generates a driving force for moving the rod (41) in the Z direction. The rod (41) is inserted into the case (20) from a Z1 side.

## Description

### CROSS REFERENCE TO RELATED APPLICATIONS

This nonprovisional application is based on Japanese Patent Application No. 2024-189560 filed on October 29, 2024 with the Japan Patent Office, the entire contents of which are hereby incorporated by reference and to which the person of the art can refer when considering the present disclosure.

### BACKGROUND

### Field

The present disclosure relates to a switching device and a vehicle.

### Description of the Background Art

Japanese Patent Laying-Open No. 2021-156234 discloses a thermal circuit in which a heat medium circulates. The thermal circuit is provided with a switching valve that switches flow channels of the heat medium.

### SUMMARY

Although not described in Japanese Patent Laying-Open No. 2021-156234, it is conceivable to use a spool valve that is moved in an axial direction by an actuator, as the switching valve. In this configuration, foreign matter in the heat medium may enter the actuator, and may be bitten in the actuator. As a result, an abnormality may occur in the driving of the actuator.

The present disclosure has been made to solve the aforementioned problem, and an object thereof is to provide a switching device and a vehicle capable of suppressing foreign matter from entering an actuator that drives a spool valve.

A switching device according to a first aspect of the present disclosure is a switching device capable of switching flow channels of a heat medium, the switching device including: a spool valve that extends in an axial direction; a case that accommodates the spool valve; and an actuator that drives the spool valve. A moving space and an internal flow path are formed inside the case, the spool valve moving in the axial direction in the moving space, the internal flow path being connected with the moving space, the heat medium flowing through the internal flow path. The actuator includes a coupling portion coupled to the spool valve, and a driving portion that generates a driving force for moving the coupling portion in the axial direction. The coupling portion is inserted into the case from above.

A vehicle according to a second aspect of the present disclosure includes the switching device according to the first aspect, and a vehicle main body that accommodates the switching device.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a first side view showing a vehicle equipped with a switching device according to one embodiment.
Fig. 2 is a second side view showing the vehicle equipped with the switching device according to the embodiment.
Fig. 3 is a perspective view showing a configuration of the switching device according to the embodiment.
Fig. 4 is a perspective view showing an actuator and spool valves of the switching device according to the embodiment.
Fig. 5 is a front view showing a configuration of a body of a case of the switching device according to the embodiment.
Fig. 6 is a front view showing a configuration of a cover of the case of the switching device according to the embodiment.
Fig. 7 is a cross sectional view showing a configuration in the vicinity of a rod of the switching device according to the embodiment.
Fig. 8 is a plan view of the rod and a cylinder of the switching device according to the embodiment as viewed from a Z2 side.
Fig. 9 is a partially enlarged view of the vicinity of a lip seal in Fig. 7.
Fig. 10 is a schematic side view showing a switching device according to a modification of the embodiment.

### DESCRIPTION OF THE PREFERRED EMBODIMENTS

An embodiment of the present disclosure will be described with reference to the drawings. It should be noted that, in the drawings referred to below, the same or corresponding members will be designated by the same reference numerals.

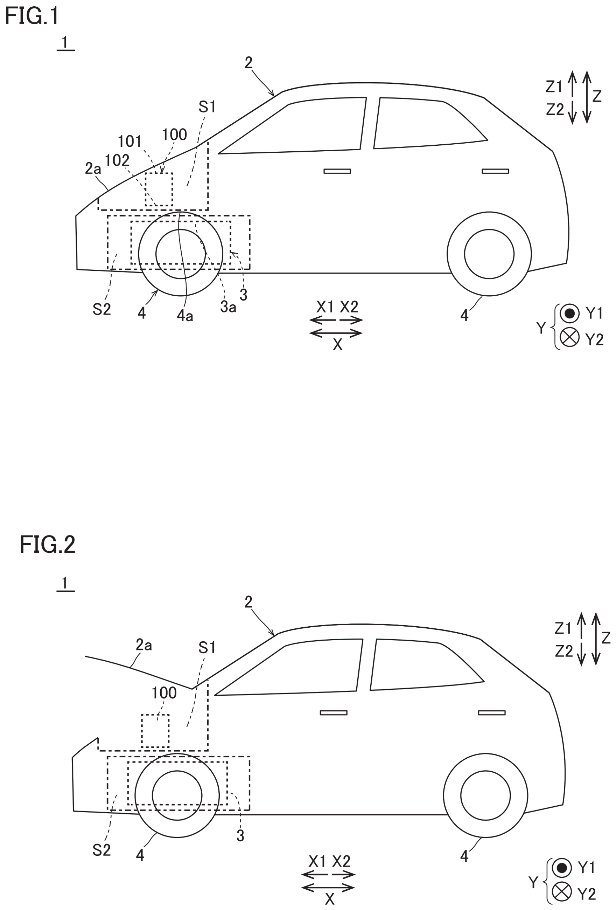

Fig. 1 is a side view of a vehicle 1 including a switching device 100 according to the present embodiment. It should be noted that the application of switching device 100 may not be limited to that for a vehicle. Further, in the present specification, a Z direction is an up-down direction. Specifically, a Z1 direction is an up direction, and a Z2 direction is a down direction. Further, each of an X direction and a Y direction is a direction orthogonal to the Z direction. The X direction and the Y direction are orthogonal to each other in a plane orthogonal to the Z direction. An X1 direction and an X2 direction are a vehicle front direction and a vehicle rear direction, respectively. A Y1 direction and a Y2 direction are a vehicle left direction and a vehicle right direction, respectively. It should be noted that the Z direction is an example of the "up-down direction" and the "axial direction" in the present disclosure.

In addition to switching device 100, vehicle 1 includes a vehicle main body 2, a driving device 3, and a plurality of (four) wheels 4. Examples of vehicle 1 include a hybrid electric vehicle, a plug-in hybrid electric vehicle, a battery electric vehicle, and the like.

Vehicle main body 2 accommodates switching device 100 and driving device 3. A space S1 that accommodates switching device 100 and a space S2 that accommodates driving device 3 are formed in vehicle main body 2. Space S1 and space S2 may be partitioned (isolated). It should be noted that space S1 is an example of the "accommodation space" in the present disclosure.

Vehicle main body 2 includes a hood 2a. Hood 2a covers space S1 from above. Hood 2a is openable and closable. Fig. 1 is a view showing a state in which hood 2a is closed, and Fig. 2 is a view showing a state in which hood 2a is opened. By opening hood 2a, space S1 is exposed. Thereby, a user of vehicle 1 or the like can access switching device 100 by opening hood 2a. It should be noted that hood 2a is an example of the "upper surface portion" in the present disclosure.

Referring to Fig. 1 again, driving device 3 is a device that generates a driving force of vehicle main body 2. Driving device 3 may be, for example, a device in which components such as a gear, a motor, and an inverter are integrated (packaged). Further, driving device 3 may be a transaxle constituted by a transmission and a differential gear.

Switching device 100 faces hood 2a in the Z direction. In other words, switching device 100 is disposed at a position where no object is interposed between switching device 100 and hood 2a. An upper end portion 101 of switching device 100 may be disposed along hood 2a.

Thereby, in the state in which hood 2a is opened, the user or the like can easily access switching device 100.

Switching device 100 is disposed on a Z1 side with respect to driving device 3. Specifically, a lower end portion 102 of switching device 100 is disposed on the Z1 side with respect to an upper end portion 3a of driving device 3. It should be noted that switching device 100 may be disposed at a position where it overlaps driving device 3 in the Z direction.

Thereby, the user or the like can easily access switching device 100 from the Z1 side, when compared with a case where switching device 100 is disposed on a Z2 side with respect to driving device 3.

Switching device 100 is disposed on the Z1 side with respect to wheel 4. Specifically, lower end portion 102 of switching device 100 is disposed on the Z1 side with respect to an upper end portion 4a of wheel 4.

Thereby, the user or the like can easily access switching device 100 from the Z1 side, when compared with a case where switching device 100 is disposed on the Z2 side with respect to wheel 4.

It should be noted that the position of switching device 100 in the Z direction is not limited to the above example. For example, in the Z direction, lower end portion 102 of switching device 100 may be located at the same position as, or on the Z2 side with respect to, upper end portion 4a of wheel 4 (or upper end portion 3a of driving device 3).

Switching device 100 is connected to a circuit (not shown) provided in vehicle main body 2. In the above circuit, a heat medium (such as water) that transmits and receives heat may circulate. The circuit may be a thermal management circuit for controlling temperature of a battery for a vehicle, for example.

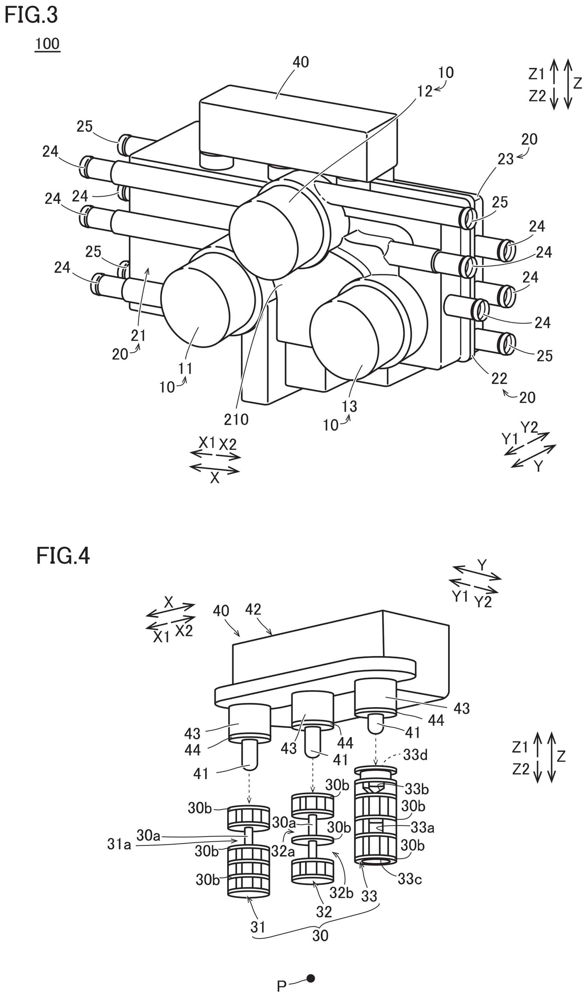

Fig. 3 is a perspective view showing a configuration of switching device 100. Switching device 100 includes at least one water pump 10, a case 20, at least one spool valve 30 (Fig. 4), and an actuator 40. In the present embodiment, switching device 100 includes three water pumps 10 and three spool valves 30. It should be noted that the number of each of water pump 10 and spool valve 30 is not limited to three, and may be one, for example.

Each of a plurality of water pumps 10 circulates the heat medium in the thermal management circuit. The plurality of water pumps 10 include a water pump 11, a water pump 12, and a water pump 13. As shown in Fig. 3, each water pump 10 may be formed in a columnar shape (a cylindrical shape in Fig. 3).

The plurality of water pumps 10 and a plurality of spool valves 30 are disposed in case 20. In other words, the plurality of water pumps 10 and the plurality of spool valves 30 are disposed in common case 20. It should be noted that case 20 may be made of resin.

Case 20 includes a body 21, a gasket 22, and a cover 23. Body 21, gasket 22, and cover 23 are arranged in the Y direction. An end portion (a peripheral edge portion) on a Y2 side of body 21 is connected to an end portion (a peripheral edge portion) on a Y1 side of cover 23.

Gasket 22 is disposed between body 21 and cover 23, and seals a gap between body 21 and cover 23. Body 21 is disposed on the Y1 side of gasket 22. Cover 23 is disposed on the Y2 side of gasket 22.

Case 20 (body 21) includes a side surface 210 in the Y direction. Side surface 210 is a side surface on the Y1 side of body 21. Each of water pumps 11, 12, and 13 is provided on side surface 210. That is, each of water pumps 11, 12, and 13 is attached to case 20 from the same direction (the Y1 side).

Case 20 includes inlet ports 24 and outlet ports 25. Inlet port 24 causes the heat medium to flow into case 20. Outlet port 25 causes the heat medium to flow out of case 20. Each of inlet port 24 and outlet port 25 is provided to each of body 21 and cover 23. Each of inlet port 24 and outlet port 25 extends in the X direction.

It should be noted that the orientation in which switching device 100 is disposed may be rotated with respect to the orientation shown in Fig. 3. For example, switching device 100 may be disposed such that each of inlet port 24 and outlet port 25 extends in the Y direction.

Fig. 4 is a perspective view showing the plurality of spool valves 30 and actuator 40. Each of the plurality of spool valves 30 extends in the Z direction. The axial directions of spool valves 30 are parallel to each other. Actuator 40 drives each of the plurality of spool valves 30.

Each of the plurality of spool valves 30 switches flow channels of the heat medium. The plurality of spool valves 30 include a spool valve 31, a spool valve 32, and a spool valve 33. Each of spool valves 31, 32, and 33 is accommodated in case 20. In the following, the description "spool valve 30" corresponds to each of spool valves 31, 32, and 33.

Each spool valve 30 is formed in a substantially cylindrical shape. Spool valve 33 is formed in a hollow shape. Each of spool valves 31 and 32 does not have a hollow shape. Spool valve 33 may be connected to a high temperature circuit which includes a heater or the like and in which a relatively high temperature heat medium circulates, of the thermal management circuit described above.

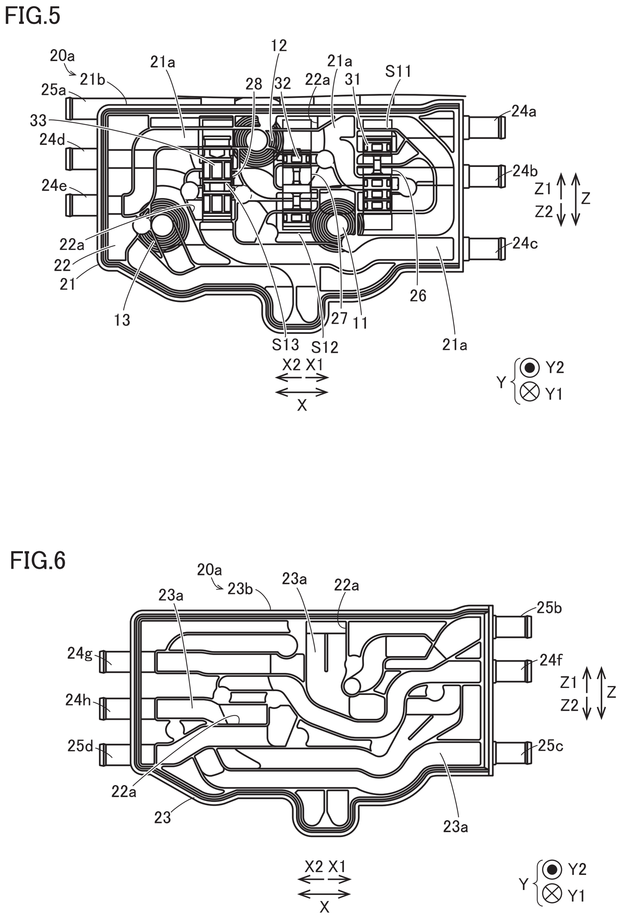

Each spool valve 30 is configured to be movable in the axial direction (the Z direction). When the position of each spool valve 30 in the axial direction changes, the state of connection between an opening, a gap, and the like formed in each spool valve 30 and a heat medium flow path (a flow path 21a (Fig. 5) described later) within case 20 is switched. For example, a gap 31a at which a shaft portion 30a of spool valve 30 is exposed is formed in spool valve 31. A gap 32a and a gap 32b at which shaft portion 30a is exposed are formed in spool valve 32. The positions of gap 32a and gap 32b in the Z direction are different from each other. An opening 33a and an opening 33b are formed in an outer peripheral surface of spool valve 33. The positions of opening 33a and opening 33b in the Z direction are different from each other. When the position of each of gaps 31a, 32a, and 32b and openings 33a and 33b in the Z direction changes, the state of flow of the heat medium in each spool valve 30 changes.

It should be noted that an opening 33d and an opening 33c are respectively formed at an end portion on the Z1 side and an end portion on the Z2 side of spool valve 33.

Each of the plurality of spool valves 30 is provided inside body 21. That is, body 21 accommodates the plurality of spool valves 30.

The plurality of spool valves 30 are disposed with a spacing therebetween in the X direction. That is, the plurality of spool valves 30 are arranged in the X direction.

Each of spool valves 31 to 33 is provided with a plurality of spool seals 30b. The plurality of spool seals 30b are disposed with a spacing therebetween in the Z direction on an outer peripheral surface of each of spool valves 31 to 33. It should be noted that, in Fig. 4, for simplification, only some of spool seals 30b are designated by the reference numeral.

Actuator 40 includes three rods 41 and an actuator case 42. Three rods 41 are coupled to spool valve 31, spool valve 32, and spool valve 33, respectively. Each rod 41 is configured to be movable in the Z direction. When each rod 41 moves in the Z direction, each spool valve 30 coupled to rod 41 also moves in the Z direction. Each rod 41 extends in the Z direction. It should be noted that rod 41 is an example of the "coupling portion" in the present disclosure.

Actuator case 42 includes three cylinders 43 and three base seals 44. Rod 41 slides in the Z direction within each cylinder 43. Base seal 44 is provided in the vicinity of an end portion on the Z2 side of each cylinder 43. It should be noted that the vicinity of the end portion has a broad meaning including both the end portion and a portion around the end portion. Further, cylinder 43 is an example of the "surrounding portion" in the present disclosure.

Fig. 5 is a front view showing the inside of body 21. A plurality of flow paths 21a are formed in body 21. In Fig. 5, for simplification, only some of flow paths 21a are designated by the reference numeral. It should be noted that flow path 21a is an example of the "internal flow path" in the present disclosure.

Inlet ports 24 (Fig. 3) provided to body 21 include ports 24a, 24b, 24c, 24d, and 24e. Outlet port 25 (Fig. 3) connected to body 21 includes a port 25a.

Spool valves 31 to 33 are respectively accommodated in spaces S11 to S13 within case 20. Specifically, spool valves 31, 32, and 33 are respectively disposed in surrounding portions 26, 27, and 28 formed in body 21. Surrounding portion 26 surrounding spool valve 31 allows spool valve 31 to move in the Z direction in space S11 within surrounding portion 26. Surrounding portion 27 surrounding spool valve 32 allows spool valve 32 to move in the Z direction in space S12 within surrounding portion 27. Surrounding portion 28 surrounding spool valve 33 allows spool valve 33 to move in the Z direction in space S13 within surrounding portion 28. Each of surrounding portions 26 to 28 (spaces S11 to S13) is connected to any of the plurality of flow paths 21a. Thereby, the heat medium flowing through each flow path 21a flows into and out of spaces S11 to S13. It should be noted that each of spaces S11 to S13 is an example of the "moving space" in the present disclosure.

Each spool seal 30b (Fig. 4) and each base seal 44 (Fig. 4) are in close contact with an inner peripheral surface of each of surrounding portions 26 to 28. Each spool seal 30b can slide in the Z direction with respect to the inner peripheral surface, together with each of spool valves 31 to 33, while being in close contact with the inner peripheral surface of each of surrounding portions 26 to 28.

Body 21 includes a top plate 21b. Top plate 21b is disposed on the Z1 side of the plurality of flow paths 21a and spaces S11 to S13. Specifically, top plate 21b is disposed at a position where it overlaps the plurality of flow paths 21a and spaces S11 to S13 in the Z direction.

A plurality of openings 22a are formed in gasket 22. The heat medium can flow between body 21 and cover 23 through openings 22a. In Fig. 5, for simplification, only some of openings 22a are designated by the reference numeral.

Fig. 6 is a front view showing the inside of cover 23. A plurality of flow paths 23a are formed in cover 23. In Fig. 6, for simplification, only some of flow paths 23a are designated by the reference numeral.

Inlet ports 24 (Fig. 3) connected to cover 23 include ports 24f, 24g, and 24h. Outlet ports 25 (Fig. 3) connected to cover 23 include ports 25b, 25c, and 25d.

Cover 23 includes a top plate 23b. Top plate 23b is disposed on the Z1 side of the plurality of flow paths 23a. Specifically, top plate 23b is disposed at a position where it overlaps the plurality of flow paths 23a in the Z direction. Top plate 23b and top plate 21b (Fig. 5) of body 21 constitute a top plate 20a of case 20.

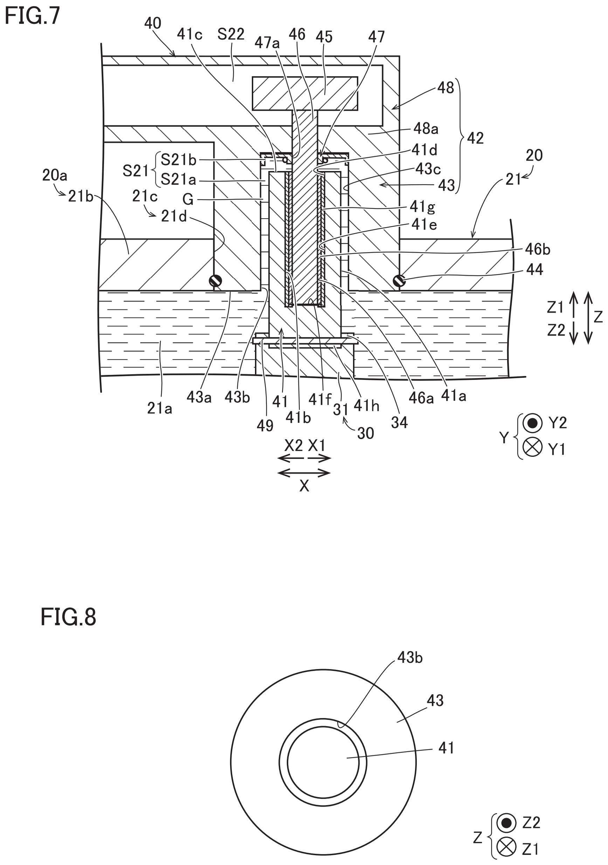

Fig. 7 is a cross sectional view showing a configuration of actuator 40. Fig. 7 shows only rod 41 connected to spool valve 31, among three rods 41. Since the configuration of actuator 40 corresponding to remaining two rods 41 is also the same, the detailed description thereof will not be provided.

Here, in a conventional switching device, foreign matter in a heat medium may enter an actuator, and may be bitten in the actuator. As a result, an abnormality may occur in the driving of the actuator.

Accordingly, in the present embodiment, rod 41 is inserted into case 20 from the Z1 side. Since foreign matter is likely to move toward the Z2 side in the heat medium, it is possible to suppress the foreign matter from moving to a root side (the Z1 side) of rod 41. As a result, it is possible to suppress the foreign matter from entering actuator 40.

Rod 41 penetrates a through hole 21c formed in top plate 21b of body 21. Through hole 21c corresponding to each rod 41 is formed in top plate 21b. That is, three through holes 21c arranged in the X direction are formed in top plate 21b.

Fig. 8 is a plan view of rod 41 as viewed from a position P (Fig. 4) spaced from rod 41 in the Z direction. When viewed from position P, cylinder 43 surrounds rod 41. When viewed from position P, cylinder 43 surrounds rod 41 from an outer peripheral side. In other words, cylinder 43 is disposed outward in a radial direction with respect to rod 41. The radial direction means a radial direction centered on an axis line of rod 41. It should be noted that, in Fig. 8, for easier understanding, illustration of spool valve 30 is omitted.

Referring to Fig. 7 again, a space S21 is formed within cylinder 43. Space S21 extends from an end surface 43a on the Z2 side of cylinder 43 toward the Z1 side. That is, an opening 43b communicating with space S21 is formed in end surface 43a. Rod 41 is inserted into space S21 through opening 43b. It should be noted that opening 43b has a circular shape (Fig. 8). Rod 41 is disposed at a position where the axis line (central axis line) of rod 41 intersects the center of opening 43b.

Space S21 includes a sliding space S21a. Sliding space S21a is a space adjacent to a space S21b of space S21 in the Z direction, space S21b being a space in which a lip seal 47 described later is disposed. Rod 41 slides in the Z direction in sliding space S21a.

Cylinder 43 is inserted into case 20 from above. Specifically, cylinder 43 penetrates through hole 21c and is inserted into body 21 together with rod 41.

Thereby, it is possible to suppress the foreign matter from entering a gap G between an outer peripheral surface 41a of rod 41 and an inner peripheral surface 43c of cylinder 43.

Cylinder 43 is fitted into through hole 21c. Base seal 44 is sandwiched between a portion of cylinder 43 inserted into through hole 21c and an inner peripheral surface 21d of top plate 21b defining through hole 21c. Thereby, base seal 44 can suppress the heat medium in flow path 21a from leaking from through hole 21c to the outside of case 20.

Actuator 40 includes a motor 45, a shaft 46, and lip seal 47. It should be noted that motor 45 and shaft 46 are examples of the "driving portion" and the "shaft member", respectively, in the present disclosure. Further, lip seal 47 is an example of the "seal member" in the present disclosure.

Motor 45 generates a driving force for moving rod 41 in the Z direction. Motor 45 is provided separately for each rod 41. That is, actuator 40 includes three motors 45.

Each motor 45 is accommodated in actuator case 42. Each motor 45 is accommodated in an accommodation chamber S22 within actuator case 42. Actuator case 42 includes an accommodation chamber defining portion 48 that defines accommodation chamber S22. Accommodation chamber defining portion 48 defines one accommodation chamber S22 in which three motors 45 are accommodated.

Each of three cylinders 43 is fixed to accommodation chamber defining portion 48. Three cylinders 43 may be integrally formed with accommodation chamber defining portion 48. Further, each of three cylinders 43 may be made of a member different from accommodation chamber defining portion 48, and may be fixed to accommodation chamber defining portion 48 by a jig or the like.

Accommodation chamber defining portion 48 is disposed on the Z1 side with respect to rod 41. Thereby, it is possible to suppress the heat medium, and thus the foreign matter in the heat medium, from entering accommodation chamber S22.

Accommodation chamber defining portion 48 is disposed on the Z1 side with respect to cylinder 43. Specifically, cylinder 43 extends from a lower portion 48a of accommodation chamber defining portion 48 toward the Z2 side. It should be noted that lower portion 48a is a portion disposed on the Z2 side of accommodation chamber S22. That is, lower portion 48a may extend in the X direction along accommodation chamber S22. In this case, only a part of lower portion 48a is disposed between accommodation chamber S22 and cylinder 43.

Accommodation chamber defining portion 48 is disposed on the Z1 side with respect to case 20. Specifically, a lower end portion of accommodation chamber defining portion 48 is disposed on the Z1 side with respect to case 20. It should be noted that accommodation chamber defining portion 48 is spaced from case 20. Thereby, it is possible to suppress the heat medium from flowing into accommodation chamber S22 and space S21, when compared with a case where at least a part of accommodation chamber defining portion 48 is disposed within case 20 (flow path 21a).

Shaft 46 extends in the Z direction from motor 45 toward rod 41. Shaft 46 has a cylindrical shape. It should be noted that shaft 46 may be directly connected with motor 45, or may be indirectly connected with motor 45 by being connected with a gear connected to motor 45. Shaft 46 transmits the driving force generated by motor 45 to rod 41.

Shaft 46 is configured to be rotatable. Shaft 46 rotates about an axis line of shaft 46 by the driving force generated by motor 45. It should be noted that the axis line of shaft 46 matches (overlaps) the axis line of rod 41.

An insertion hole 41b is formed in rod 41. Shaft 46 is inserted into insertion hole 41b from the Z1 side. It should be noted that insertion hole 41b is an example of the "shaft member insertion hole" in the present disclosure.

Thereby, in a configuration in which shaft 46 extends from the Z1 side toward rod 41, shaft 46 can be easily inserted into insertion hole 41b formed in rod 41.

Insertion hole 41b of rod 41 extends downward from an upper end surface 41c of rod 41. An opening 41d communicating with insertion hole 41b is formed in upper end surface 41c. Shaft 46 is inserted into insertion hole 41b through opening 41d.

Shaft 46 includes an outer peripheral surface 46a. Outer peripheral surface 46a is provided with a feed screw 46b. It should be noted that feed screw 46b is an example of the "first feed screw" in the present disclosure.

Rod 41 includes an inner peripheral surface 41e and a bottom surface 41f. Insertion hole 41b is defined by inner peripheral surface 41e and bottom surface 41f. Inner peripheral surface 41e faces outer peripheral surface 46a of shaft 46. Inner peripheral surface 41e is provided with a feed screw 41g. Feed screw 41g meshes with feed screw 46b of shaft 46. Thereby, a rotational force of shaft 46 is converted into a propulsive force for moving rod 41 in the Z direction, by feed screw 46b and feed screw 41g. It should be noted that a lower end portion of shaft 46 may be in contact with bottom surface 41f. Further, feed screw 41g is an example of the "second feed screw" in the present disclosure.

Lip seal 47 is provided between sliding space S21a and accommodation chamber S22. Specifically, lip seal 47 is disposed in space S21b formed between sliding space S21a and accommodation chamber S22. Space S21b is formed at an upper end portion of space S21, and is formed at a position where it is adjacent to sliding space S21a in the Z direction.

A through hole 47a is formed in lip seal 47. Shaft 46 extends from motor 45 to rod 41 by penetrating through hole 47a.

Thereby, it is possible to transmit the driving force of motor 45 to rod 41 via shaft 46 while suppressing leakage of the heat medium in space S21 to accommodation chamber S22 by lip seal 47. Further, since air included in the heat medium in space S21 is likely to move toward the Z1 side, the air can be discharged to accommodation chamber S22 via through hole 47a of lip seal 47.

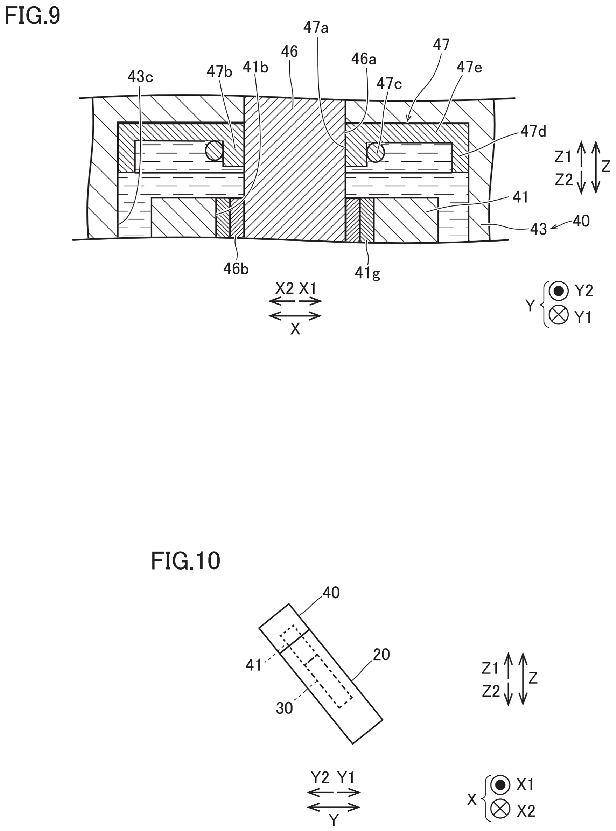

Fig. 9 is a partially enlarged view of the vicinity of lip seal 47 in Fig. 7. Lip seal 47 has an inner peripheral portion 47b, a spring 47c, an outer peripheral portion 47d, and a connecting portion 47e.

Inner peripheral portion 47b is formed in an annular shape. Shaft 46 penetrates inner peripheral portion 47b in the Z direction. An inner peripheral surface of inner peripheral portion 47b is adjacent to outer peripheral surface 46a of shaft 46. Feed screw 46b is not provided in a portion of outer peripheral surface 46a adjacent to the inner peripheral surface of inner peripheral portion 47b. It should be noted that through hole 47a is formed in inner peripheral portion 47b.

Spring 47c is formed in an annular shape. Spring 47c surrounds inner peripheral portion 47b from an outer peripheral side, and applies a biasing force to inner peripheral portion 47b from the outer peripheral side. The biasing force determines the degree of close contact between shaft 46 and inner peripheral portion 47b.

Outer peripheral portion 47d is formed in an annular shape. Outer peripheral portion 47d is in close contact with inner peripheral surface 43c of cylinder 43. Outer peripheral portion 47d may be fixed to actuator case 42 (cylinder 43) by a biasing force from a metal ring (not shown) provided inside lip seal 47.

Connecting portion 47e connects inner peripheral portion 47b and outer peripheral portion 47d. Connecting portion 47e is also formed in an annular shape, as with inner peripheral portion 47b and outer peripheral portion 47d.

Referring to Fig. 7 again, actuator 40 includes a pin member 49. Rod 41 includes an end portion 41h on the Z2 side. Further, spool valve 30 includes an end portion 34 on the Z1 side. End portion 41h of rod 41 and end portion 34 of spool valve 30 are coupled by pin member 49. Pin member 49 penetrates end portion 41h and end portion 34. Pin member 49 may have a rod shape extending in the X direction, for example.

As described above, in the above embodiment, rod 41 is inserted into case 20 from above (the Z1 side). Since rod 41 is thereby inserted with respect to flow path 21a from above, it is possible to suppress the foreign matter in the heat medium flowing through flow path 21a from entering actuator 40. As a result, it is possible to suppress occurrence of an abnormality in the driving of actuator 40 due to entrance of the foreign matter between rod 41 and shaft 46, for example.

### (Modifications)

Although the above embodiment has described an example in which each of rod 41 and spool valve 30 extends in the Z direction, the present disclosure is not limited thereto. As shown in Fig. 10, as long as rod 41 is inserted into case 20 from the Z1 side, the direction in which each of rod 41 and spool valve 30 extends (the direction in which they move) may intersect the Z direction.

Although the above embodiment has described an example in which cylinder 43 is inserted into case 20 from the Z1 side together with rod 41, the present disclosure is not limited thereto. Cylinder 43 may not be inserted into case 20. Cylinder 43 may not be provided to actuator case 42.

Although the above embodiment has described an example in which accommodation chamber defining portion 48 that defines accommodation chamber S22 is disposed on the Z1 side with respect to rod 41, the present disclosure is not limited thereto. For example, accommodation chamber defining portion 48 may be disposed on a lateral side (the Y1 side or the Y2 side) of rod 41 (cylinder 43). Further, accommodation chamber defining portion 48 may be disposed on a lateral side of case 20.

Although the above embodiment has described an example in which lip seal 47 is used, the present disclosure is not limited thereto. For example, a mechanical seal, a gland packing, or the like may be used instead of lip seal 47.

Although the above embodiment has described an example in which shaft 46 is inserted into rod 41, the present disclosure is not limited thereto. For example, the shaft member may be in contact with the upper end surface of the rod, and apply a pressing force to the upper end surface, to move the rod in the axial direction. In this case, the shaft member may be configured to be movable (or expandable and contractible) in the axial direction without rotating.

Although the above embodiment has described an example in which switching device 100 faces hood 2a in the Z direction, the present disclosure is not limited thereto. For example, switching device 100 may be accommodated in a case having a cover that covers switching device 100 from the Z1 side.

It should be noted that the configurations of the above embodiment and the above various modifications may be combined with each other.

Although the embodiment of the present disclosure has been described, it should be understood that the embodiment disclosed herein is illustrative and non-restrictive in every respect. The scope of the present disclosure is defined by the scope of the claims, and is intended to include any modifications within the scope and meaning equivalent to the scope of the claims.

## Claims

1. A switching device (100) capable of switching flow channels of a heat medium, the switching device comprising:
a spool valve (30) that extends in an axial direction;
a case (20) that accommodates the spool valve (30); and
an actuator (40) that is configured to drive the spool valve (30), wherein
a moving space (S11, S12, S13) and an internal flow path (21a) are formed inside the case (20), the spool valve (30) being configured to move in the axial direction in the moving space (S11, S12, S13), the internal flow path (21a) being connected with the moving space, the heat medium being configured to flow through the internal flow path (21a),
the actuator (40) includes
a coupling portion (41) coupled to the spool valve (30), and
a driving portion (45) configured to generate a driving force for moving the coupling portion (41) in the axial direction, and
the coupling portion (41) is inserted into the case (20) from above.

2. The switching device according to claim 1, wherein
the actuator (40) includes an actuator case (42) that accommodates the driving portion (45),
the actuator case (42) has a surrounding portion (43) that surrounds the coupling portion (41) when viewed from a position spaced from the coupling portion in the axial direction, and
the surrounding portion (43) is inserted into the case (20) from above.

3. The switching device according to claim 2, wherein
the actuator case (42) includes an accommodation chamber defining portion (48) that defines an accommodation chamber (S22) accommodating the driving portion (45), and
the accommodation chamber defining portion (48) is disposed above the coupling portion (41).

4. The switching device according to claim 3, wherein the accommodation chamber defining portion (48) is disposed above the case (20).

5. The switching device according to claim 3 or 4, wherein
a sliding space (S21a) in which the coupling portion (41) is configured to slide in the axial direction is formed within the actuator case (42),
the actuator (40) includes
a seal member (47) provided between the sliding space (S21a) and the accommodation chamber (S22), and
a shaft member (46) that is configured to transmit the driving force generated by the driving portion (45) to the coupling portion (41), and extends in the axial direction, and
the shaft member (46) extends from the driving portion (45) to the coupling portion (41) by penetrating a through hole (47a) formed in the seal member (47).

6. The switching device according to claim 5, wherein the seal member includes a lip seal (47).

7. The switching device according to claim 5 or 6, wherein
the shaft member (46) is configured to be rotatable,
a shaft member insertion hole (41b) into which the shaft member (46) is inserted is formed in the coupling portion (41),
the shaft member (46) has an outer peripheral surface (46a) provided with a first feed screw (46b),
the shaft member insertion hole (41b) has an inner peripheral surface (41e) provided with a second feed screw (41g) that meshes with the first feed screw (46b), and
the shaft member (46) is inserted into the shaft member insertion hole (41b) from above.

8. The switching device according to any one of claims 1 to 7, wherein the axial direction is an up-down direction (Z).

9. A vehicle (1) comprising:
the switching device (100) according to any one of claims 1 to 8; and
a vehicle main body (2) that accommodates the switching device (100).

10. The vehicle according to claim 9, wherein
an accommodation space (S1) that accommodates the switching device (100) is formed in the vehicle main body (2),
the vehicle main body (2) includes an upper surface portion (2a) that is openable and closable and covers the accommodation space (S1) from above, and
the switching device (100) faces the upper surface portion (2a) in an up-down direction (Z).

11. The vehicle according to claim 9 or 10, further comprising a driving device (3) configured to generate a driving force of the vehicle main body (2), wherein
the switching device (100) is disposed above the driving device (3).

12. The vehicle according to any of claims 9 to 11, further comprising a wheel (4), wherein the switching device (100) is disposed above the wheel (4).
